Europäisches Patentamt

European Patent Office

Office européen des brevets

(11) Publication number: **0 442 354 A1**

# EUROPEAN PATENT APPLICATION

(21) Application number: **91101546.9**

(51) Int. Cl.⁵: **B60S 1/04**

(22) Date of filing: **05.02.91**

(30) Priority: **16.02.90 IT 5286890 U**

(43) Date of publication of application:
**21.08.91 Bulletin 91/34**

(84) Designated Contracting States:
**AT DE ES FR GB IT NL SE**

(71) Applicant: **IVECO FIAT S.p.A.**
**Via Puglia 35**
**I-10156 Torino(IT)**

(72) Inventor: **Morando, Carlo**
**Via Galimberti, 15**
**I-14100 Asti(IT)**

(74) Representative: **Boggio, Luigi et al**
**STUDIO TORTA Società Semplice Via Viotti, 9**
**I-10121 Torino(IT)**

(54) **Driver's cab for a commercial vehicle provided with a protecting means for a wiper assembly.**

(57) The cab (1) is provided with a front wall (10) extending so as to protect a pivot mechanism (6) for a wiper assembly (4) and at least part of a support arm (11) for each wiper blade (5) of the wiper assembly (4).

Fig.1

The present invention relates to a driver's cab for a commercial vehicle provided with a protecting means for a wiper assembly.

In current commercial vehicles the wiper assembly is for the most part mounted visibly in the region of the cab structure below the windscreen.

The aforementioned arrangement has various disadvantages both from a strictly functional point of view and from an aesthetic point of view.

With regard to the functional aspects, the presence at the front of the cab of the pivot mechanism of the wiper assembly provides a zone giving rise to turbulence which causes both a reduction in the coefficient of aerodynamic penetration (CX) and an unsatisfactory action for the removal of water from the surface of the windscreen, owing to the fact that the fluid stream of water is not uniformly distributed.

From the aesthetic point of view, it is evident that the presence of a supporting and operating mechanism for the wiper blades is not particularly pleasing.

The aim of the present invention is to devise a driver's cab for a commercial vehicle which is able to obviate the aforementioned disadvantages of known cabs.

The aforesaid aim is achieved by the present invention in that it relates to a driver's cab for a commercial vehicle, characterised in that it comprises a front wall extending so as to protect a pivot mechanism for a wiper assembly and at least part of a support arm for each wiper blade of said wiper assembly.

With a view to a better understanding of the present invention, a preferred form of embodiment will be described below non-restrictively by way of example, with reference to the accompanying drawings, wherein:

Figure 1 is a front view of a driver's cab for a commercial vehicle designed in accordance with the present invention, and

Figure 2 is a sectional view, on an enlarged scale, taken along a line II-II in Figure 1.

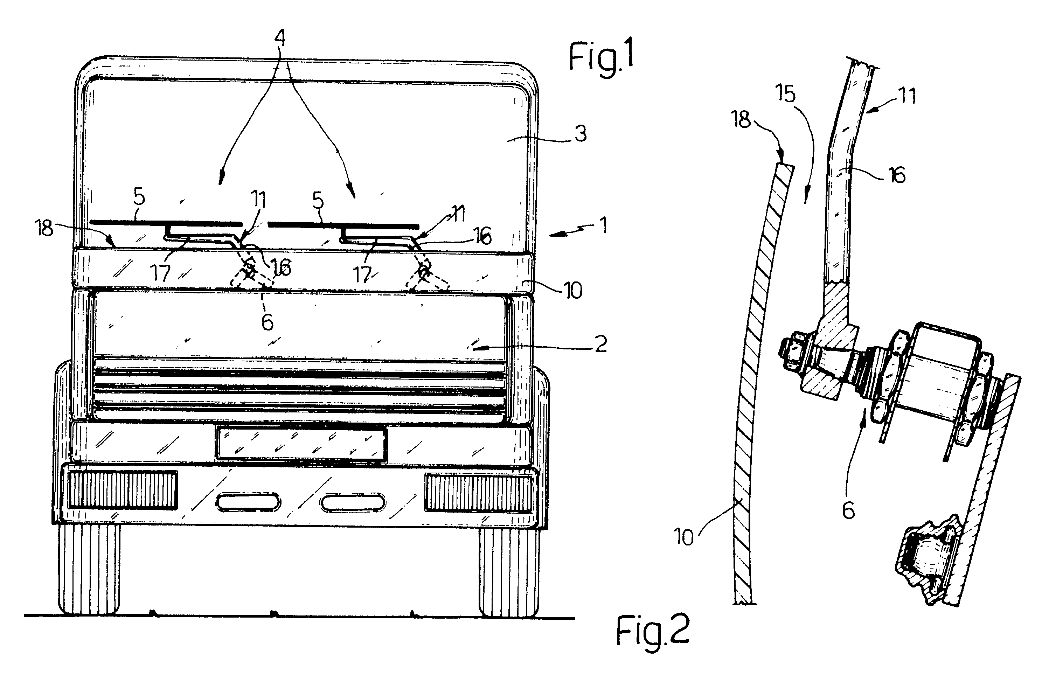

Referring now to Figure 1, the reference numeral 1 generally designates a driver's cab for a commercial vehicle, clearly showing a front bonnet 2, a windscreen 3, a wiper assembly 4 provided with two wiper blades 5 and a pivot mechanism 6.

According to the present invention and also with reference to Figure 2, the cab 1 is provided with a front wall 10 which extends transversely up from the bonnet 2 and towards the windscreen 3.

In particular, the wall 10 extends so as to protect the pivot mechanism 6 and at least part of a support arm 11 for each wiper blade 5.

In this way only a part of the arms 11 and the corresponding wiper blades 5 remain visible, whereas the remaining part of the arms 11 and the pivot mechanism 6 are accommodated within a pocket 15 bounded externally by the wall 10 and internally by the load-bearing structure (not shown) of the cab 1.

Furthermore, according to the present invention, it is evident that each arm 11 has a first portion 16 having one end connected to the pivot mechanism 6 and a second portion 17 which is bent with respect to the first portion 16 so as to form with the latter an obtuse angle, and which has its respective end connected to a central fastening means of the wiper blade 5 itself.

Accordingly, in the rest position, each wiper blade 5 and the portion 17 adjacent thereto of the respective arm 11 are arranged horizontally and parallel to an upper edge 18 of the aforementioned transverse wall 10.

A study of the features of the cab developed in accordance with the present invention reveals the advantages offered thereby.

From the functional point of view, the covering of the pivot mechanism 6 at the front of the cab 1 reduces the creation of turbulence to a minimum, thus improving the coefficient of aerodynamic penetration (CX) and facilitating, in operation, the removal of water from the surface of the windscreen 3, owing to the fact that the fluid stream of water is now uniformly distributed.

The improvement from the aesthetic point of view is obvious, since only the wiper blades 5 and substantially the adjacent portion 17 of the respective arms 11 remain visible, the whole assembly being properly aligned (horizontally) in the bottom region of the windscreen 3.

Finally, it is evident that the cab 1 described above could undergo various modifications and variants without departing from the scope of the present invention.

In particular, it is clear that the vertical extension of the transverse wall 10 could be different from that illustrated; for example, it could be enlarged so as to shield from view the entire support arm 11 for each wiper blade 5 and, optionally, even the wiper blade 5 itself.

## Claims

1. A driver's cab for a commercial vehicle, characterised in that it comprises a front wall (10) extending so as to protect a pivot mechanism (6) for a wiper assembly (4) and at least part of a support arm (11) for each wiper blade (5) of said wiper assembly (4).

2. A cab according to Claim 1, characterised in that said wall (10) externally delimits a pocket (15) which is bounded internally by the load-bearing structure of said cab, said pocket (15) accommodating said pivot mechanism (6) and at least part of said support arm (11).

3. A cab according to Claim 1 or 2, characterised in that said support arm (11) has a first portion (16) having one end connected to said pivot mechanism (6) and a second portion (17) which is bent with respect to the first portion (16) so as to form with the latter an obtuse angle, and which has its respective end connected to a central fastening means of said wiper blade (5).

Fig.1

Fig.2

4

European
Patent Office

**EUROPEAN SEARCH
REPORT**

Application Number

**EP 91 10 1546**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | AT-A-3 774 85   (STEYR-DAIMLER-PUCH)<br>* page 2, lines 14 - 23 * * page 2, lines 35 - 41 * * figures 1-3 * | 1,2,3 | B 60 S 1/04 |
| | — — — | | |
| Y,A | DE-A-2 163 046   (DAIMLER-BENZ)<br>* page 2, lines 1 - 3 * * page 3, line 24 - page 5, line 11 * * figures 1-3 * | 3,1 | |
| | — — — | | |
| Y,A | US-A-4 310 943   (PALMA)<br>* column 1, lines 5 - 8 * * column 3, line 63 - column 4, line 2 @ column 6, lines 6 - 44 @ figures 1, 2, 4 * | 2,1,3 | |
| | — — — — — | | |
| | | | TECHNICAL FIELDS SEARCHED (Int. Cl.5) |
| | | | B 60 S<br>B 62 D |

The present search report has been drawn up for all claims

| Place of search | Date of completion of search | Examiner |
|---|---|---|
| The Hague | 15 May 91 | CLASEN M.P. |